# EUROPEAN PATENT SPECIFICATION

(11) **EP 2 241 155 B1**
(45) Date of publication and mention of the grant of the patent: **23.12.2015**
(21) Application number: 09708729.0
(22) Date of filing: 04.02.2009
(51) Int. Cl.: H04W 72/12, H04W 16/14

(54) **WIRELESS COMMUNICATIONS ARRANGEMENT, NETWORK AND APPROACH THEREFOR**
DRAHTLOSE KOMMUNIKATIONSANORDNUNG, NETZWERK UND ANSATZ DAFÜR
AGENCEMENT ET RÉSEAU DE COMMUNICATION SANS FIL ET APPROCHE ASSOCIÉE

(30) Priority: 06.02.2008 US 26545 P
(43) Date of publication of application: 20.10.2010
(73) Proprietor: NXP B.V., 5656 AG Eindhoven (NL)
(72) Inventor: HIRSCH, Olaf, NL-5656 AG Eindhoven (NL); GARG, Parag, NL-5656 AG Eindhoven (NL); EVERAERE, Dominique, NL-5656 AG Eindhoven (NL)
(74) Representative: Hardingham, Christopher Mark
(86) International application number: PCT/IB2009/050450
(87) International publication number: WO 2009/098646

(56) References cited:
- WO-A-2007/036686
- US-A1- 2004 242 159
- BYOUNG HOON JUNG ET AL: "Ubiquitous Wearable Computer (UWC)-Aided Coexistence Algorithm in an Overlaid Network Environment of WLAN and ZigBee Networks" WIRELESS PERVASIVE COMPUTING, 2007. ISWPC '07. 2ND INTERNATIONAL SYMPOSIUM ON, IEEE, PI, 1 February 2007 (2007-02-01), XP031072437 ISBN: 978-1-4244-0522-0

## Description

### Field of the Invention

The present invention relates generally to communications and, more particularly, to communication methods and arrangements involving communications over wireless networks.

### Background

Many different types of electronic communications are carried out for a variety of purposes and with a variety of different types of devices and systems. One type of electronic communications system involves wireless communications between devices. An example of a wireless approach involves the use of IEEE 802.11 wireless protocols to transmit packet-based data between wireless devices.

A system that includes connections between two or more devices is often referred to as a network. For some wireless networks, network devices communicate using wireless access points that make communications between the device and the network possible. These access points can be integral to or separate from the network devices.

A variety of devices can communicate over wireless networks. For example, a central processing unit (CPU) in a personal computer, hand-held device or media device can communicate with other devices in communication with the wireless network using a wireless transceiver. Software applications running on the CPU communicate with the wireless transceiver using a communications BUS or other link.

The interface between software applications and wireless communications is often discussed in terms of protocol layers. The low-level transmission level, such as analog transmission circuitry, is sometimes referred to as the physical layer (PHY). In a wireless environment, the PHY includes and/or is connected to an antenna for receiving wireless signals. Driver and receiver circuitry transmits and receives signals carried on the antenna.

In wireless networks operating in accordance with IEEE 802.11, a wireless (or Wi-Fi) station (STA) is a device that can connect to one or more other STAs, or to a wireless access point (AP) to connect to a larger network. Generally, an AP communicates with one or more STAs to communicatively link the STAs with each other and/or with a network such as a local area network (LAN) and, where so connected, with a larger network such as an Ethernet network and/or to the Internet.

In wireless environments involving the operation of devices using different standards, such as the IEEE 802.11 standard and the Bluetooth standard, a wireless LAN (WLAN) device may be unable to receive a frame from an AP due to an ongoing Bluetooth transmission. In addition, collocated WLAN devices are sometimes unable to send an acknowledgement (ACK) frame due to scheduling conflicts with a collocated Bluetooth device. Generally, the potential for concurrent wireless transmissions is high and causes issues with the communication of information on one or both networks.

International Patent Application Publication No. WO2007/036686 discloses a system and method for communication in dual protocol environments.

United States Patent Application publication no. US2004/0242159 discloses a combined IEEE 802.11 (WiFi) and Bluetooth transceiver and method of operation employing busy signals to monitor when transmissions of each type are being transmitted or received, and employing a synchronizing signal to synchronize the use of time slots.

These and other matters present challenges to the implementation of wireless devices and methods for communicating over wireless networks operating in a common environment.

### Summary

Various aspects of the present invention involve a method for use with wireless devices operating on two or more wireless networks having overlapping signal channels.

According to a first aspect there is provided a method as defined in claim 1.

According to an example embodiment of the present invention, scheduling information is transmitted over network coexistence control lines for scheduling medium access to wireless networks and mitigating collisions therebetween on their overlapping signal channels. In some applications, collocated Bluetooth and WLAN circuits transmit additional scheduling information, such as how long a communication is expected to take, over existing coexistence control lines for the circuits. This information is used to facilitate scheduling decisions and desirable performance for Bluetooth and WLAN communications with a single wireless device by, for example, scheduling transmissions from a wireless access point communicating with the wireless device in such a way that scheduling conflicts between WLAN and Bluetooth communications with the device are reduced or eliminated.

According to a second aspect, there is provided a system as claimed in claim 6.

According to another example embodiment of the present invention, packet-based communications with a network device that communicates on different wireless networks having overlapping signal channels are controlled as follows. Scheduling data is generated in response to the network device's usage of an overlapping signal channel of a first one of the wireless networks. This scheduling data characterizes an expected length of time that the overlapping signal channel is needed. The scheduling data is communicated over existing network coexistence control lines between collocated communications circuits that respectively control communications with the network device on the first wireless network and on a second one of the wireless networks. The scheduling data is used to schedule communications with the network device on an overlapping signal channel of the second wireless network.

The above summary is not intended to describe each illustrated embodiment or every implementation of the present invention. The figures and detailed description that follow also exemplify various embodiments.

### Brief Description of the Drawings

The invention may be more completely understood in consideration of the following detailed description of various embodiments of the invention in connection with the accompanying drawings, in which:
FIG. 1A shows a wireless network environment involving different wireless networks communicating on overlapping wireless channels, according to an example embodiment of the present invention;
FIG. 1B shows two collocated integrated circuits communicating over coexistence control lines as can be implemented with the environment in FIG. 1A, according to another example embodiment of the present invention.
FIG. 2 shows plots for communication protocols implemented for wireless communications, according to another embodiment of the present invention;
FIG. 3 shows a state diagram for controlling communications over wireless networks, according to another example embodiment of the present invention; and
FIG. 4 shows a data transfer approach for wireless communications, according to another example embodiment of the present invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention, including that defined by the appended claims.

### Detailed Description

The present invention is believed to be applicable to a variety of circuits and approaches involving electronic communications, and in particular to those involving wireless communications over different coexisting networks. While the present invention is not necessarily limited to such applications, an appreciation of various aspects of the invention is gained through a discussion of examples in such an environment.

According to an example embodiment of the present invention, a multiple-network system operates to wirelessly communicate information over two or more different wireless networks from a device operating on the networks by communicating scheduling information between collocated circuits over network coexistence control lines. This information includes, for example, a request for network access as well as additional information that can be used to schedule network transmissions to serve the request. The scheduling information is used to schedule communications with a particular network device, such as a mobile phone or personal digital assistant device (PDA) that uses both Bluetooth and WLAN.

In a more particular example embodiment, network scheduling information is transmitted over coexistence network control lines for a device operating on a medium including a wireless local area network (WLAN) and a Bluetooth network that operate at a common frequency. The scheduling information is used to schedule communications with the device and other devices communicating on the networks. Medium usage control data sent over the coexistence network control lines includes additional information characterizing a length of time that the medium will be needed and/or a purpose for using the medium. The additional information is used to schedule communications on the networks. With this approach, medium access to coexisting WLAN and Bluetooth networks for a particular network device is efficiently scheduled, mitigating collisions between the two networks.

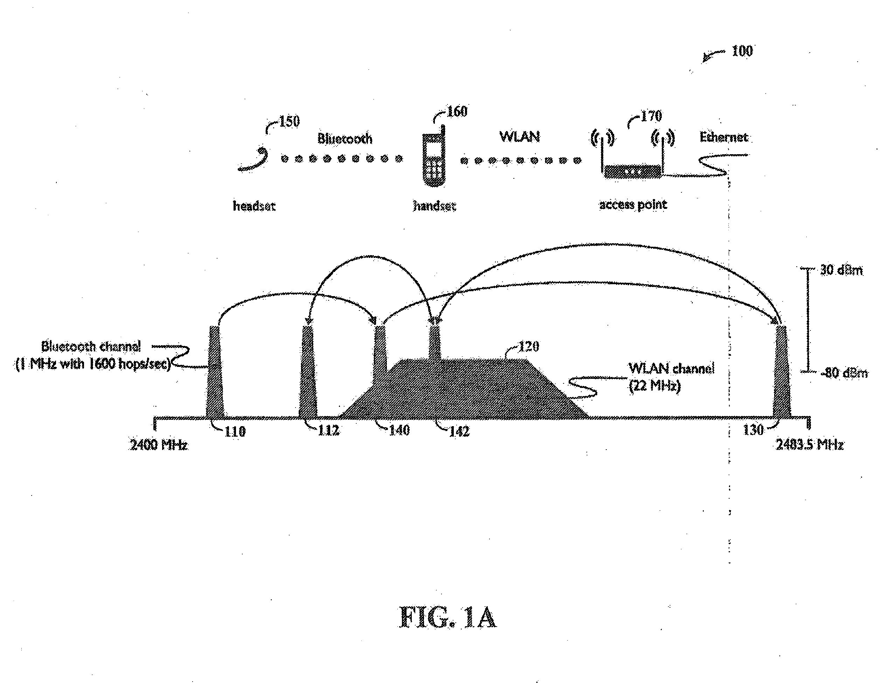

FIG. 1A shows a wireless network environment 100 involving different wireless networks communicating over a shared wireless channel, according to another example embodiment of the present invention. The arrangement 100 includes various devices operating in accordance with one or both of overlapping WLAN and Bluetooth wireless channels, including channels 110, 112, 120, 130, 140 and 142. Generally, these channels operate in a portion of a particular range (e.g., between 2400MHz-2499MHz for 2.4GHz communications), with channels 120, 140 and 142 shown operating at overlapping frequencies by way of example.

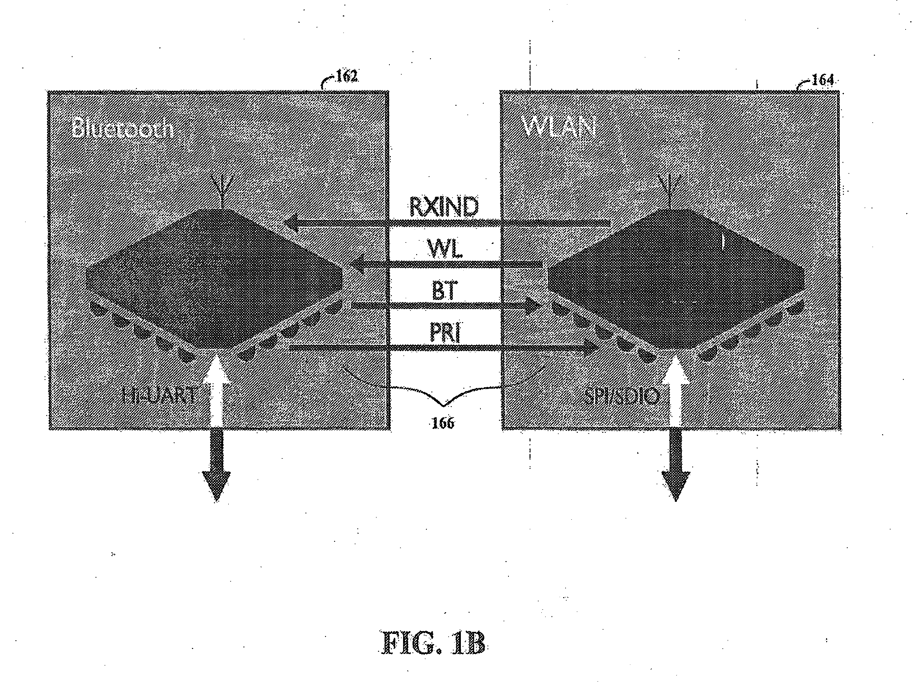

The shown channels and approaches described herein are applicable to use with a variety of devices. FIG. 1A shows example devices, including a Bluetooth headset 150, a mobile handset 160 and a wireless access point 170, the latter of which is connected to an Ethernet network. The Bluetooth headset 150 communicates with the mobile handset 160 over a Bluetooth network channel. The wireless access point 170 communicates with the mobile handset 160 over a WLAN channel. Accordingly, the mobile handset 160 communicates over both a Bluetooth network channel (in communicating with the headset 150) and a WLAN channel (in communicating with the wireless access point 170), using collocated Bluetooth and WLAN circuits to respectively control communications on both networks. Network coexistence control lines between these collocated circuits are used to schedule communications with the handset 160 on the overlapping signal channels (*see*, e.g., discussion with FIG. 1B below). This scenario is applicable, for example, to a mobile handset 160 such as a mobile telephone, media device or other device that communicates with local WLANs for accessing local networks and/or the Internet, and also communicates locally with accessory devices such as the headset 150.

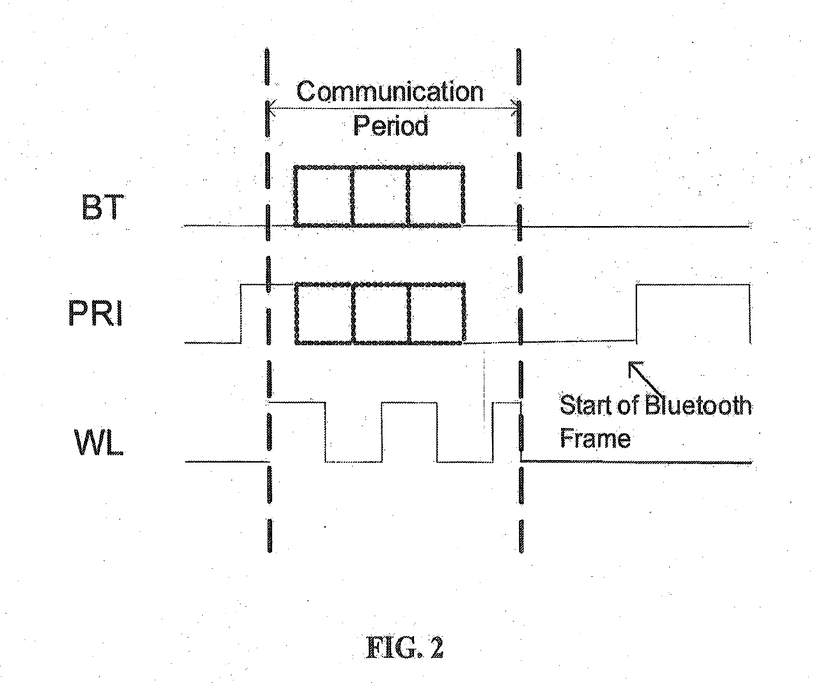

Various example embodiments of the present invention, including those described above and with figures 2-4 are applicable to communications with the devices such as the headset, handset and access point 150,160 and 170, where one or more of the devices is programmed to carry out scheduled communication functions in accordance with example embodiments described herein. In one embodiment, the wireless handset 160 is programmed to communicate control data to the access point 170 in response to the handset's expected use of Bluetooth communications. The access point 170 is programmed to use this control data to schedule transmissions with the handset 160. With this approach, potential collisions or data corruption that can occur when data is communicated simultaneously with the handset on both the WLAN and Bluetooth networks is mitigated.

FIG. 1B shows two collocated integrated circuits 162 and 164 communicating over coexistence control lines as can be implemented with the environment in FIG. 1A (*e.g.,* with the handset 160), according to another example embodiment of the present invention. The circuit 162 controls Bluetooth communications for the handset 160, and the circuit 164 controls WLAN communications for the handset 160. Coexistence control lines 166 are used to communicate control signals between the circuits 162 and 164, for controlling each circuit's respective use of an overlapping wireless medium. Control signals include a WLAN receive indicator (RXIND) signal, WLAN arbitration signal (WL), Bluetooth (BT) signal and Bluetooth priority indicator (PRI) signal. In addition to these signals and/or in connection with the same, these control lines 166 are used to communicate additional information that characterizes, directly or indirectly, an expected time period during which the medium is needed.

In one embodiment, the Bluetooth circuit 162 communicates information over the coexistence control lines 166 about an expected use of the medium, such as the expected length of a Bluetooth communication between the handset 160 and the headset 150, or an expected type of Bluetooth communication between the same. The WLAN circuit 164 uses this information to schedule transmissions between the access point 170 and the handset 160, to mitigate potential collisions or data corruption that can occur when data is communicated simultaneously with the handset on both the WLAN and Bluetooth networks. For example, where the type of Bluetooth communication is communicated, a time associated with that type of communication (*e.g.,* as stored in a lookup table) can be used to determine the amount of time that the medium will be needed for the Bluetooth communication. This information is used to schedule usage of the medium by the WLAN circuit 164.

The following discussion leading into FIG. 2 characterizes various embodiments of the present invention, and may be applicable for implementation with one or more devices and environments such as those shown in FIG. 1A, in FIG. 1B and discussed above. These embodiments are discussed in connection with a network environment including a Bluetooth network and a WLAN network, with certain nomenclature relating to the relevant standards. However, the approaches described herein may be generally applicable to use with a variety of different network types.

According to another example embodiment of the present invention, a wireless device (STA) uses WLAN protocol data transfer features to communicate data to a wireless access point (AP) to indirectly control the flow of frames from the AP to the STA, using features of the WLAN protocol. For example, AP operating on the WLAN protocol is generally unable to transmit any frames over the medium (*i.e*., overlapping WLAN and Bluetooth channels) while the Network Allocation Vector (NAV) is set. The STA uses this WLAN protocol feature to control the flow of frames from the AP to the STA.

If the STA sets the NAV before it transitions the medium to the collocated Bluetooth device, the AP effectively responds by not transmitting a frame while Bluetooth has the medium (*i*.*e.,* while the Bluetooth device is using a channel that overlaps with the WLAN channel). In this manner, by setting the NAV, the STA can effectively control the response of the AP and, where appropriate, use that control to effect desirable communications.

A STA can set the NAV using one or more of a variety of approaches. In one embodiment, the STA sets the NAV by sending a clear to send (CTS) frame to its own MAC address. The duration field in the CTS frame is set to the duration for which the STA does not want to receive frames from the AP. In this manner, the STA indirectly controls the AP to effectively set a duration during which the AP will not send frames. This approach is useful, for example, to set a time period, by setting the duration field in the CTS frame, during which the STA expects Bluetooth communications to take place.

In another embodiment, the STA uses the NAV to control communications by the AP by transmitting a contention-free end (CF-End) frame to reset the NAV to zero. This approach can be used with APs that do not support point coordination function (PCF) of which the CF-End frame is part of, when the AP operates in accordance with WLAN (IEEE 802.11).

When Bluetooth uses priority access to access the medium, the medium is transitioned to Bluetooth at the beginning of the next Bluetooth frame. The Bluetooth device raises the PRI line (*e.g.,* about 200µs) before the start of the Bluetooth frame to allow the STA to stop any ongoing transmission and transmit a CTS frame. A CTS frame is sent with a backoff set to 1. If the STA is not able to send the CTS frame before the beginning of the Bluetooth frame, the STA cancels or otherwise does not generate the CTS frame.

The duration of the Bluetooth transmission, and according to the duration of the CTS set to allow the Bluetooth transmission, is set in a variety of manners. Generally, the time that a Bluetooth communication will take the medium is set in accordance with the type of data that a Bluetooth device will transmit. In one embodiment, the duration field is set to a maximum duration, and a CF-End frame is sent to reset the NAV. In another embodiment, the duration field is set according to the type of data to be transmitted over the Bluetooth channel. Using these approaches, packet traffic arbitration (PTA) lines are used to transmit information that is used to set the time that Bluetooth transmissions will have the medium (*e.g.,* information characterizing the type of data to be communicated over the Bluetooth channel).

In some embodiments, a CF-End control approach (*e.g.,* used for asynchronous connectionless link (ACL) links) involves using a CTS frame with the duration field set to a maximum value and, immediately after transmitting the CTS frame, setting the WL line to re-acquire the medium. If the STA is not able to transmit the CTS frame, the medium is also acquired. Once the medium has been acquired for WLAN use, either pending WLAN frames or a CF-End frame are sent via the medium. The STA then waits (*e.g.,* less than about 1ms) for the AP to send a frame t the STA. If no frame has been sent, the medium can be transitioned back to Bluetooth (*e.g.,* for Bluetooth transmissions between the STA and a Bluetooth device) without sending a CTS frame.

In some applications, frames are fragmented to ensure communications thereof. For instance, when a CTS signal and CF-End signal are added to 5.5Mbps frames *(e.g.,* which are about 2.5ms long, not including any backoff period) and communicated using an HV3 (30-byte high quality voice packet) window for non-ACL links, the frames are fragmented to fit in-between the HV3 periods.

The STA sets and sends a duration field using one or more approaches. Generally, the STA needs to determine or otherwise use the time that Bluetooth transmissions will occupy the medium before setting the duration field. This determination can be made for different communications approaches, such as those involving an extended synchronous connection orientated ((e)SCO) links. For instance, with (e)SCO links, Bluetooth reserves the link for a set time (*e.g.,* 1.25ms), part of which is used to receive frames from the AP. Bluetooth generally releases the medium after this set time, except when a poll frame is being sent or if an eSCO link requires a retransmission.

Bluetooth and WLAN devices exchange information in different manners, depending upon the application, such as by communicating on the driver level or directly between the devices as is done with PTA control. For driver level information exchange, the Bluetooth stack and WLAN drivers as used with the related standards can be modified to facilitate this exchange. Direct communication between the devices is carried out through a coexistence interface, which is also used to transmit arbitration signals. Data is transmitted during the PRI period from the Bluetooth device to the STA and, in some applications, from the STA to the Bluetooth device.

FIG. 2 shows plots of BT, PRI and WL for communication protocols implemented for wireless communications, according to another embodiment of the present invention. Data bits are encoded using the BT and PRI line. For each data bit, the BT and PRI go through at least one transition. Once the data bits have been sent, Bluetooth raises the PRI line again (*e.g*., about 1µs) before the beginning of the BT frame. This approach facilitates a communication period, as shown, where information regarding a Bluetooth transmission can be sent to facilitate control of overlapping Bluetooth and WLAN channels.

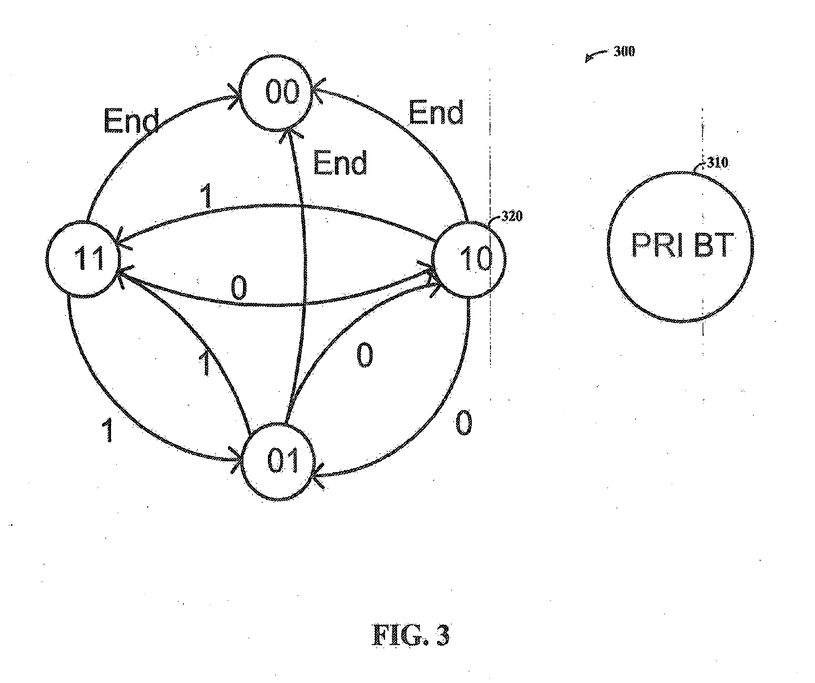

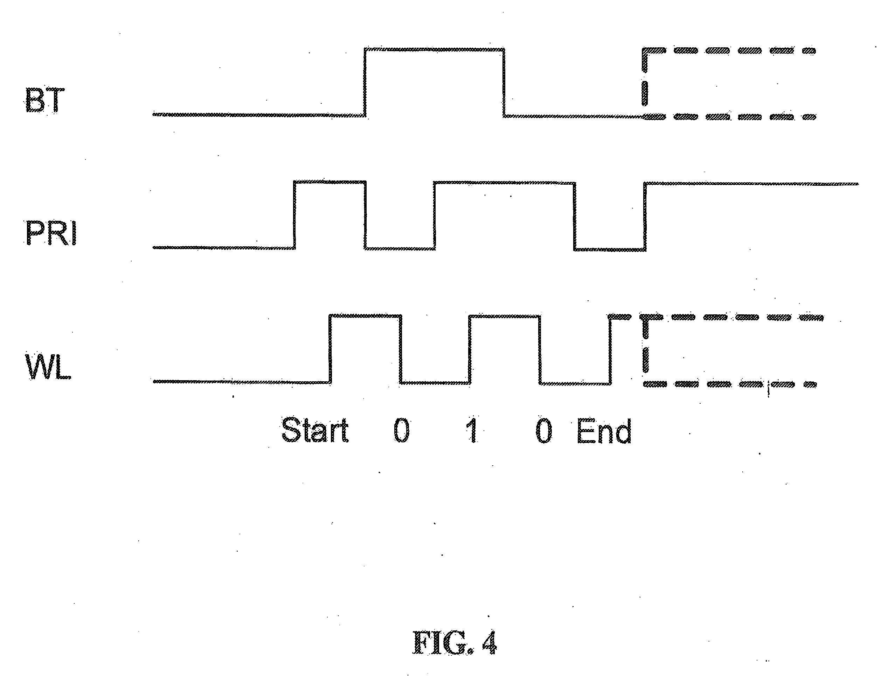

The approaches shown in FIG. 2 may be carried out in an environment involving a wireless station (STA) such as a handset that communicates with a wireless access point (AP) over a WLAN, and that communicates with a Bluetooth device using Bluetooth protocols, such that the WLAN and Bluetooth communications occur on overlapping channels. In these contexts, the approaches shown in FIG. 2 may be carried out in connection with the devices 150, 160 and 170 as shown in FIG. 1A, and with the discussion corresponding to FIG. 1A and FIG. 1B above. This scenario may also be applied in connection with FIG. 3 and FIG. 4 discussed below (*i.e.,* as may be relevant to FIG. 1A and/or FIG. 1B).

FIG. 3 shows a state diagram 300 for controlling communications over wireless networks, according to another example embodiment of the present invention. The bits for the PRI and BT states are respectively shown on the left and right for each bit, as shown by representative bit 310 with a "PRI" bit on the left and a "BT" bit on the right. By way of example, this corresponds to a PRI bit "1" and BT bit "0" at 320. The WL line is used to acknowledge the received data by a raising or falling edge (*e.g.,* as shown in FIG. 2).

Data transfer starts after the PRI line has been raised and WLAN (device/software) has acknowledged the raised PRI line. The data transmission is terminated by setting the PRI and BT line to zero, where the WL line acknowledges the end. The PRI line is transitioned back to one until Bluetooth releases the medium again.

After Bluetooth releases the medium, the BT and WL line follow their normal protocols (PTA protocol). For example, in one application, BT is set high if Bluetooth transmits, and set low if it receives. In other applications, BT is simply set low.

FIG. 4 shows a data transfer approach for wireless communications, according to another example embodiment of the present invention. In FIG. 4, Bluetooth is shown transmitting the data bits "010" to WLAN as an example; however, this and related discussion is applicable to other transmissions as well. To facilitate these transmissions, in accordance with the WL line, BT and PRI are respectively held high and low as shown, corresponding to WL and the transmission of data bits "010."

In other embodiments, data is transmitted from a WLAN to a Bluetooth device using a similar approach. Data encoding is similar to that described above (*e.g*., with FIG. 4), with WLAN communications using the WL and RXIND line to encode the data, and Bluetooth using the BT line to acknowledge it.

In connection with one or more embodiments, a PTA data protocol used to communicate data for use in scheduling transmissions on a medium for WLAN, relative to Bluetooth's use of a medium, is structured so that important information is encoded in few bits and other information is encoded with more bits. Depending on the Link Info Element at the beginning, different information elements follow. The following tables show information related to such approaches, respectively for the protocol, link information element, role information element, ACL TX (transmit) packet element, ACL RX (receive) packet element, NBf element and NFc element.

**Protocol**

| Order | Information | Notes |
|---|---|---|
| 1 | Link | |
| 2 | Role | |
| 3 | ACL TX Packet | Optional. For ACL link |
| 4 | ACL RX Packet | Optional. For ACL link |
| 5 | Nbf Element | Optional. For ACL link |
| 6 | Nfc Element | Optional. For ACL link |

**Link Info Element**

| Bit | Description |
|---|---|
| 0 - 1 | 00 - ACL Link |
| | 01 - reserved |
| | 10 - SCO Link |
| | 11 - eSCO Link |

**Role Info Element**

| Bit | Description |
|---|---|
| 0 | 0 - Master |
| | 1 - Slave |

**ACL TX Packet Element**

| Bit | Description |
|---|---|
| 0 - 1 | 00 - 1 Slot |
| | 01 - 3 Siots |
| | 10 - 5 Slots |
| | 11 - Reserved |

**ACL RX Packet Element**

| Bit | Description |
|---|---|
| 0 - 1 | 00 - 1 Slot |
| | 01 - 3 Slots |
| | 10 - 5 Slots |
| | 11 - Reserved |

**NBf Element**

| Bit | Description |
|---|---|
| 0 - 3 | Number of Frames |

**NFc Element**

| Bit | Description |
|---|---|
| 0 - 3 | Number of Frames |

The various embodiments described above and shown in the figures are provided by way of illustration only and should not be construed to limit the invention. Based on the above discussion and illustrations, those skilled in the art will readily recognize that various modifications and changes may be made to the present invention without strictly following the exemplary embodiments and applications illustrated and described herein. For example, one or more of the above example embodiments and implementations may be implemented with networks other than 802.11 and Bluetooth networks, or protocols other than the PTA protocol. Also, the various processing approaches described herein can be implemented using a variety of devices and methods including general purpose processors implementing specialized software, digital signal processors, programmable logic arrays, discrete logic components and fully-programmable and semi-programmable circuits such as PLAs (programmable logic arrays). Such devices and methods can be used, for example, to operate network functions as collocated devices (e.g., chips) in a common network device such as a mobile telephone or PDA. These approaches are implemented in connection with various example embodiments of the present invention, such as with one or more of a wireless device, wireless access point, or dedicated Bluetooth device. Such modifications and changes do not depart from the scope of the present invention that is set forth in the following claims.

## Claims

1. A method for controlling packet-based communications with a network device (160) that communicates on different wireless networks having overlapping signal channels, the method comprising:
generating scheduling data in response to the network device's usage of an overlapping signal channel of a first one of the wireless networks, which first one of the wireless networks is a Bluetooth network, the scheduling data characterizing an expected length of time that the overlapping signal channel is needed;
communicating the scheduling data over existing network coexistence control lines (166) between collocated communications circuits (162, 164) that respectively control communications with the network device on the first wireless network and on a second one of the wireless networks, which second one of the wireless networks is a WLAN; and
using the scheduling data to schedule communications with the network device on an overlapping signal channel of theWLAN, wherein using the scheduling data to schedule communications with the network device on an overlapping signal channel of the WLAN includes communicating data that sets a duration field of a communication to a wireless access point (170, AP) on the WLAN to set a time period during which the access point will not send frames to the network device.

2. The method of claim 1, wherein the collocated communications circuits (162,164) are separate integrated circuits that are located in the network device and coupled via the coexistence control lines, each of the integrated circuits respectively controlling communications with the network device on the WLAN and Bluetooth networks.

3. The method of claim 1, wherein using the scheduling data to schedule communications with the network device on an overlapping signal channel of the WLAN includes scheduling communications with the network device on the second wireless networ after a delay period that includes the expected length of time.

4. The method of claim 1, wherein
using the scheduling data to schedule communications with the network device on an overlapping signal channel of the WLAN includes communicating a contention-free End (CF-End) frame to a wireless access point to reset the network allocation vector (NAV) of the access point.

5. The method of claim 1,
further including determining a time period that the Bluetooth network needs the overlapping channel in response to an expected type of communication on the Bluetooth network, and
wherein using the scheduling data to schedule communications with the network device on an overlapping signal channel of the WLAN includes setting a duration field of a communication to a wireless access point on the WLAN to the determined time period to prevent the access point from sending frames to the network device during the time period.

6. A system for controlling packet-based communications with a network device (160) that communicates on different wireless networks having overlapping signal channels, the system comprising:
a collocated circuit arrangement to
generate scheduling data in response to the network device's usage of an overlapping signal channel of a first one of the wireless networks, which first one of the wireless networks is a Bluetooth network, the scheduling data characterizing an expected length of time that the overlapping signal channel is needed,
communicate the scheduling data over existing network coexistence control lines between collocated communications circuits that respectively control communications with the network device on the first wireless network and on a second one of the wireless networks, which second one of the wireless network is a WLAN, and
use the scheduling data to schedule communications with the network device on an overlapping signal channel of the WLAN communicating data that sets a duration field of a communication to a wireless access point on the WLAN to set a time period during which the access point will not send frames to the network device.

7. The system of claim 6, wherein the collocated circuit arrangement includes
a first integrated circuit (162) that controls communications with the network device on the Bluetooth network,
a second integrated circuit (164) that controls communications with the network device on the WLAN, and
said network coexistence control lines that communicatively couple the first and second integrated circuits,
wherein the first integrated circuit, second integrated circuit and network coexistence control lines are collocated in the network device.

8. The system of claim 6,
further including a wireless access point (170) operating on the WLAN,
wherein the collocated circuit arrangement uses the scheduling data to schedule communications with the network device by communicating communications control data to the access point, and
the access point being responsive to the communications control data by communicating with the collocated circuit arrangement.

9. The system of claim 6, wherein the collocated circuit arrangement uses the scheduling data to schedule communications with the network device on an overlapping signal channel of the WLAN by communicating data that, when processed by a receiving device on theWLAN, causes the receiving device to delay transmissions to the network device for a time period during which the collocated circuit arrangement is using the Bluetooth network.

10. The system of claim 6, wherein the collocated circuit arrangement uses the scheduling data to schedule communications with the network device on an overlapping signal channel of the WLAN by scheduling communications after a delay period that includes the expected length of time.

11. The system of claim 6, wherein the collocated circuit arrangement
generates scheduling data that is indicative of a type of communication that the first network will make on the overlapping signal channel, and
uses the scheduling data to schedule communications with the network device on an overlapping signal channel of the WLAN by scheduling communications after a delay corresponding to an expected length of time that the type of communication will take.

## Patentansprüche

1. Ein Verfahren zum Steuern von Paket-basierten Kommunikationen mit einer Netzwerk Vorrichtung (160), die auf verschiedenen drahtlosen Netzwerken kommuniziert, welche überlappende Signalkanäle haben, wobei das Verfahren aufweist:
Erzeugen von Planungsdaten als Reaktion auf die Verwendung, mittels der Netzwerk Vorrichtung, eines überlappenden Signalkanals eines ersten der drahtlosen Netzwerke, welches erste der drahtlosen Netzwerke ein Bluetooth Netzwerk ist, wobei die Planungsdaten eine erwartete Zeitlänge charakterisieren, welche der überlappende Signalkanal benötigt wird;
Kommunizieren der Planungsdaten über existierende Netzwerk Koexistenz Steuerleitungen (166) zwischen kollokierten Kommunikationsschaltkreisen (162, 164), welche jeweils Kommunikationen mit der Netzwerk Vorrichtung auf dem ersten drahtlosen Netzwerk und auf einem zweiten der drahtlosen Netzwerke steuern, welches zweite der drahtlosen Netzwerke ein WLAN ist; und
Verwenden der Planungsdaten, um Kommunikationen mit der Netzwerk Vorrichtung auf einem überlappenden Signalkanal des WLANs zu planen, wobei das Verwenden der Planungsdaten, um Kommunikationen mit der Netzwerk Vorrichtung auf einem überlappenden Signalkanal des WLANs zu planen, das Kommunizieren von Daten enthält, welche ein Dauer Feld einer Kommunikation zu einem drahtlosen Zugangspunkt (170, AP) auf dem WLAN einstellen, um eine Zeitperiode einzustellen, während welcher der Zugangspunkt keine Frames zu der Netzwerk Vorrichtung sendet.

2. Das Verfahren gemäß Anspruch 1, wobei die kollokierten Kommunikationsschaltkreise (162, 164) getrennte integrierte Schaltkreise sind, welche in der Netzwerk Vorrichtung angeordnet sind und via die koexistierenden Steuerleitungen gekoppelt sind, wobei jeder der integrierten Schaltkreise jeweils Kommunikationen mit der Netzwerk Vorrichtung auf dem WLAN und Bluetooth Netzwerk steuert.

3. Das Verfahren gemäß Anspruch 1, wobei das Verwenden der Planungsdaten, um Kommunikationen mit der Netzwerk Vorrichtung auf einem überlappenden Signalkanal des WLANs zu planen, das Planen von Kommunikationen mit der Netzwerk Vorrichtung auf dem zweiten drahtlosen Netzwerk enthält, nach einer Verzögerungsperiode, welche die erwartete Zeitlänge enthält.

4. Das Verfahren gemäß Anspruch 1, wobei
Verwenden der Planungsdaten, um Kommunikationen mit der Netzwerk Vorrichtung auf einem überlappenden Signalkanal des WLANs zu planen, enthält
Kommunizieren eines konfliktfreien Endrahmens (CF-End) zu einem drahtlosen Zugangspunkt, um den Netzwerk Allokationsvektor (NAV) des Zugangspunkts zurückzusetzen.

5. Das Verfahren gemäß Anspruch 1, ferner enthaltend
Bestimmen einer Zeitperiode, welche das Bluetooth Netzwerk den überlappenden Kanal benötigt, als Reaktion auf einen erwarteten Kommunikationstyp auf dem Bluetooth Netzwerk, und
wobei das Verwenden der Planungsdaten, um Kommunikationen mit der Netzwerk Vorrichtung auf einem überlappenden Signalkanal des WLANs zu planen, enthält
Einstellen eines Dauer Felds einer Kommunikation zu einem drahtlosen Zugangspunkt auf dem WLAN auf die bestimmte Zeitperiode, um den Zugangspunkt daran zu hindern, während der Zeitperiode Frames zu der Netzwerk Vorrichtung zu senden.

6. Ein System zum Steuern von Paket-basierten Kommunikationen mit einer Netzwerk Vorrichtung (160), welche auf verschiedenen drahtlosen Netzwerken kommuniziert, welche überlappende Signalkanäle haben, wobei das System aufweist:
eine kollokierte Schaltungsanordnung zum
Erzeugen von Planungsdaten als Reaktion auf die Verwendung, mittels der Netzwerk Vorrichtung, eines überlappenden Signalkanals eines ersten der drahtlosen Netzwerke, welches erste der drahtlosen Netzwerke ein Bluetooth Netzwerk ist, wobei die Planungsdaten eine erwartete Zeitlänge charakterisieren, welche der überlappende Signalkanal benötigt wird,
Kommunizieren der Planungsdaten über existierende Netzwerk Koexistenz Steuerleitungen zwischen kollokierten Kommunikationsschaltkreisen, welche jeweils Kommunikationen mit der Netzwerk Vorrichtung auf dem ersten drahtlosen Netzwerk und auf einem zweiten der drahtlosen Netzwerke steuern, welches zweite der drahtlosen Netzwerke ein WLAN ist, und
Verwenden der Planungsdaten, um Kommunikationen mit der Netzwerk Vorrichtung auf einem überlappenden Signalkanal des WLANs zu planen, welches Daten kommuniziert, welche ein Dauer Feld einer Kommunikation zu einem drahtlosen Zugangspunkt auf dem WLAN einstellen, um eine Zeitperiode einzustellen, während welcher der Zugangspunkt keine Frames zu der Netzwerk Vorrichtung sendet.

7. Das System gemäß Anspruch 6, wobei die kollokierte Schaltungsanordnung enthält
einen ersten integrierten Schaltkreis (162), welcher Kommunikationen mit der Netzwerk Vorrichtung auf dem Bluetooth Netzwerk steuert,
einen zweiten integrierten Schaltkreis (164), welcher Kommunikationen mit der Netzwerk Vorrichtung auf dem WLAN steuert, und
die Netzwerk Koexistenz Steuerleitungen, welche den ersten und zweiten integrierten Schaltkreis kommunikativ koppeln,
wobei der erste integrierte Schaltkreis, der zweite integrierte Schaltkreis und die Netzwerk Koexistenz Steuerleitungen in der Netzwerk Vorrichtung kollokiert sind.

8. Das System gemäß Anspruch 6, ferner enthaltend
einen drahtlosen Zugangspunkt (170), welcher auf dem WLAN betrieben wird, wobei die kollokierte Schaltungsanordnung die Planungsdaten verwendet, um Kommunikationen mit der Netzwerk Vorrichtung zu planen mittels Kommunizierens von Kommunikationssteuerdaten zu dem Zugangspunkt, und
wobei der Zugangspunkt reaktionsfähig ist auf die Kommunikationssteuerdaten mittels Kommunizierens mit der kollokierten Schaltungsanordnung.

9. Das System gemäß Anspruch 6, wobei die kollokierte Schaltungsanordnung die Planungsdaten verwendet, um Kommunikationen mit der Netzwerk Vorrichtung auf einem überlappenden Signalkanal des WLANs zu planen mittels Kommunizierens von Daten, welche, wenn sie mittels einer Empfangsvorrichtung auf dem WLAN verarbeitet werden, die Empfangsvorrichtung veranlassen, Übertragungen zu der Netzwerk Vorrichtung um eine Zeitperiode zu verzögern, während welcher die kollokierte Schaltungsanordnung das Bluetooth Netzwerk verwendet.

10. Das System gemäß Anspruch 6, wobei die kollokierte Schaltungsanordnung die Planungsdaten verwendet, um Kommunikationen mit der Netzwerk Vorrichtung auf einem überlappenden Signalkanal des WLANs zu planen mittels Planens der Kommunikationen nach einer Verzögerungsperiode, welche die erwartete Zeitlänge enthält.

11. Das System gemäß Anspruch 6, wobei die kollokierte Schaltungsanordnung
Planungsdaten erzeugt, welche indikativ für einen Kommunikationstyp sind, welchen das erste Netzwerk auf dem überlappenden Signalkanal ausführen wird, und
die Planungsdaten verwendet, um Kommunikationen mit der Netzwerk Vorrichtung auf einem überlappenden Signalkanal des WLANs zu planen mittels Planens von Kommunikationen nach einer Verzögerung, welche zu einer erwarteten Zeitlänge korrespondiert, welche der Kommunikationstyp dauern wird.

## Revendications

1. Procédé de commande de communications par paquets avec un dispositif de réseau (160) qui communique sur différents réseaux sans fil ayant des canaux de signalisation chevauchants, le procédé comprenant :
la génération de données d'ordonnancement en réponse à l'utilisation par le dispositif de réseau d'un canal de signalisation chevauchant d'un premier des réseaux sans fil, lequel premier des réseaux sans fil est un réseau Bluetooth, les données d'ordonnancement caractérisant une longueur de temps prévue de besoin du canal de signalisation chevauchant ;
la communication des données d'ordonnancement sur des lignes de commande de coexistence de réseaux existantes (166) entre des circuits de communications cositués (162, 164) qui commandent respectivement des communications avec le dispositif de réseau sur le premier réseau sans fil et sur un second des réseaux sans fil, lequel second des réseaux sans fil étant un WLAN ; et
l'utilisation des données d'ordonnancement pour ordonnancer les communications avec le dispositif de réseau sur un canal de signalisation chevauchant du WLAN, dans lequel l'utilisation des données d'ordonnancement pour ordonnancer les communications avec le dispositif de réseau sur un canal de signalisation chevauchant du WLAN comporte la communication de données qui définissent un champ de durée d'une communication avec un point d'accès sans fil (170, AP) sur le WLAN pour définir une période de temps durant laquelle le point d'accès n'enverra pas de trames au dispositif de réseau.

2. Procédé selon la revendication 1, dans lequel les circuits de communications cositués (162, 164) sont des circuits intégrés séparés qui sont situés dans le dispositif de réseau et couplés par l'intermédiaire des lignes de commande de coexistence, chacun des circuits intégrés commandant respectivement les communications avec le dispositif de réseau sur les réseaux WLAN et Bluetooth.

3. Procédé selon la revendication 1, dans lequel l'utilisation des données d'ordonnancement pour ordonnancer les communications avec le dispositif de réseau sur un canal de signalisation chevauchant du WLAN comporte l'ordonnancement des communications avec le dispositif de réseau sur le second réseau sans fil après une période de retard qui comporte la longueur de temps prévue.

4. Procédé selon la revendication 1, dans lequel l'utilisation des données d'ordonnancement pour ordonnancer les communications avec le dispositif de réseau sur un canal de signalisation chevauchant du WLAN comporte la communication d'une trame de fin sans conflit d'accès (CF-End) à un point d'accès sans fil pour redéfinir le vecteur d'attribution de réseau (NAV) du point d'accès.

5. Procédé selon la revendication 1,
comportant en outre la détermination d'une période de temps pendant laquelle le réseau Bluetooth nécessite le canal chevauchant en réponse à un type prévu de communication sur le réseau Bluetooth, et
dans lequel l'utilisation des données d'ordonnancement pour ordonnancer les communications avec le dispositif de réseau sur un canal de signalisation chevauchant du WLAN comporte la définition d'un champ de durée d'une communication à un point d'accès sans fil sur le WLAN à la période de temps déterminée pour empêcher le point d'accès d'envoyer des trames au dispositif de réseau durant cette période de temps.

6. Dispositif de commande de communications par paquets avec un dispositif de réseau (160) qui communique sur différents réseaux sans fil ayant des canaux de signalisation chevauchants, le système comprenant :
un agencement de circuits cositués pour :
générer des données d'ordonnancement en réponse à l'utilisation par le dispositif de réseau d'un canal de signalisation chevauchant d'un premier des réseaux sans fil, lequel premier des réseaux sans fil est un réseau Bluetooth, les données d'ordonnancement caractérisant une longueur de temps prévue de besoin du canal de signalisation chevauchant ;
communiquer les données d'ordonnancement sur des lignes de commande de coexistence de réseau existantes entre des circuits de communications cositués qui commandent respectivement des communications avec le dispositif de réseau sur le premier réseau sans fil et sur un second des réseaux sans fil, lequel second des réseaux sans fil étant un WLAN, et
utiliser les données d'ordonnancement pour ordonnancer les communications avec le dispositif de réseau sur un canal de signalisation chevauchant du WLAN communiquant des données qui définissent un champ de durée d'une communication avec un point d'accès sans fil sur le WLAN pour définir une période de temps durant laquelle le point d'accès n'enverra pas de trames au dispositif de réseau.

7. Système selon la revendication 6, dans lequel l'agencement de circuits cositués comporte :
un premier circuit intégré (162) qui commande les communications avec le dispositif de réseau sur le réseau Bluetooth,
un second circuit intégré (164) qui commande les communications avec le dispositif de réseau sur le WLAN, et
lesdites lignes de commande de coexistence de réseau qui couplent en vue de communications les premier et second circuits intégrés,
dans lequel le premier circuit intégré, le second circuit intégré et les lignes de commande de coexistence sont cositués dans le dispositif de réseau.

8. Système selon la revendication 6,
comportant en outre un point d'accès sans fil (170) fonctionnant sur le WLAN,
dans lequel l'agencement de circuits cositués utilise les données d'ordonnancement pour ordonnancer des communications avec le dispositif de réseau en communiquant des données de commande de communications au point d'accès, et
le point d'accès répondant aux données de commande de communications en communiquant avec l'agencement de circuits cositués.

9. Système selon la revendication 6, dans lequel l'agencement de circuits cositués utilise les données d'ordonnancement pour ordonnancer les communications avec le dispositif de réseau sur un canal de signalisation chevauchant du WLAN en communiquant des données, qui, lorsqu'elles sont traitées par un dispositif récepteur sur le WLAN, amènent le dispositif récepteur à retarder les transmissions au dispositif de réseau pendant une période de temps durant laquelle l'agencement de circuits cositués utilise le réseau Bluetooth.

10. Système selon la revendication 6, dans lequel l'agencement de circuits cositués utilise les données d'ordonnancement pour ordonnancer les communications avec le dispositif de réseau sur un canal de signalisation chevauchant du WLAN en ordonnant les communications après une période de retard qui comporte la longueur de temps prévue.

11. Système selon la revendication 6, dans lequel l'agencement de circuits cositués
génère des données d'ordonnancement indicatives d'un type de communication que le premier réseau fera sur le canal de signalisation chevauchant, et utilise les données d'ordonnancement pour ordonnancer les communications avec le dispositif de réseau sur un canal de signalisation chevauchant du WLAN en ordonnançant les communications après un retard correspondant à une longueur de temps prévue pour le type de communication.
